(19) Europäisches Patentamt
European Patent Office
Office européen des brevets

(11) **EP 1 543 714 B1**

(12) **EUROPÄISCHE PATENTSCHRIFT**

(45) Veröffentlichungstag und Bekanntmachung des Hinweises auf die Patenterteilung:
**25.05.2011 Patentblatt 2011/21**

(51) Int Cl.:
***A01D 43/08*** *(2006.01)*

(21) Anmeldenummer: **04029531.3**

(22) Anmeldetag: **14.12.2004**

(54) **Gerät zum Ernten von Mais**

Device for harvesting maize

Dispositif de recolte de maize

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **17.12.2003 DE 10359553**
**07.12.2004 DE 102004059064**

(43) Veröffentlichungstag der Anmeldung:
**22.06.2005 Patentblatt 2005/25**

(73) Patentinhaber: **CLAAS Saulgau GmbH**
**88348 Bad Saulgau (DE)**

(72) Erfinder:
• **Gebele, Josef**
**88348 Bad Saulgau (DE)**

• **Loebe, Stefan**
**88348 Bad Saulgau (DE)**
• **Rauch, Hans**
**88348 Bad Saulgau (DE)**
• **Roth, Georg**
**88348 Bad Saulgau (DE)**
• **Schelkle, Roland**
**88348 Bad Saulgau (DE)**
• **Wicker, Anton**
**88348 Bad Saulgau (DE)**

(56) Entgegenhaltungen:
**EP-A- 0 882 389      WO-A-01/05217**
**DE-A1- 3 209 334      DE-A1- 19 856 444**
**DE-U1- 20 018 200      FR-A- 2 539 950**
**US-B1- 6 298 643**

**Beschreibung**

Die Erfindung bezieht sich auf ein Vorsatzgerät für Erntemaschinen zum Mähen, Aufnehmen und Weiterführen von stängeligem Erntegut nach dem Oberbegriff des Anspruchs 1.

Derartige Vorsatzgeräte werden beispielsweise als auswechselbare Einrichtung für selbstfahrende Feldhäcksler zum Ernten von Mais oder dergleichen stängeligem Erntegut eingesetzt.

Dabei werden die Maispflanzen in bekannter Weise in Bodennähe von rotierenden Messerscheiben oberhalb der Wurzel abgetrennt, und von darüber liegenden Einzugs- und Förderscheiben in entsprechend ausgeformten Fördertaschen erfasst und aufgenommen, von diesen vorübergehend gehalten und in entsprechend ausgeformte Förderkanäle eingeführt. Messerscheiben und Förderscheiben bilden zusammen als umlaufend angetriebene Baueinheit einen Schneid- und Förderrotor, dem Fachmann auch als Schneid- und Förderelement bekannt.

Die so von dem Schneid- und Förderelement gehaltenen Stängel der Maispflanzen sollen aber nur einen vorübergehenden Transport und somit einen begrenzten Transportweg auf der Umlaufbahn der Fördertaschen erfahren, welches bedeutet, dass sie irgendwann auf der Umlaufbahn der Fördertaschen aus diesen wieder entfernt werden müssen und an andere Förderelemente übergeben werden müssen, damit sie in Richtung des Einzugs des Maishäckslers weitergefördert werden können.

Auch müssen sie dabei die Richtung Ihrer Förderbewegung aus der Querförderung heraus ändern und entgegengesetzt der Fahrtrichtung mit den abgeschnittenen Enden voraus in den Einzugsspalt der Einzugswalzen gelangen. Insbesondere bei großen Arbeitsbreiten drängeln sich die Maispflanzen bereits in dem Zuführkanal, welches bedeutet, dass die Packungsdichte des Erntegutstroms in Richtung des Einzugs in den Einzugskanal des Häckslers zunimmt, wodurch höhere Anforderungen an die Funktionssicherheit des gesamten Fördersystems des Ernte-Vorsatzgerätes gestellt sind. Diese Funktionssicherheit ist die Vorraussetzung für einen möglichst störungsfreien Weitertransport der Maispflanzen im Erntegutstrom und sie ist gleichermaßen in hohem Masse Vorraussetzung für einen prozesssicheren und damit wirtschaftlichen Betrieb derartiger Vorsatzgeräte zur Ernte von Maispflanzen mit Maishäckslern.

Aus der DE 198 56 444 A1 ist ein derartiges Vorsatzgerät bekannt. Bei diesem Vorsatzgerät handelt es sich um eine Mäh- und Aufnahmeeinrichtung zum Ernten von stängeligem Erntegut. Dazu verfügt das Vorsatzgerät über mehrere nebeneinander angeordnete mit rotierend angetriebenen Messerscheiben ausgestattete Aufnahmeelemente, ausgebildet als Mäh- und Fördertrommeln, die das abgemähte Erntegut über entsprechend ausgebildete Mitnehmer auf die Rückseite der Aufnahmeelemente fördern, um es dann dort zur Unterstützung des Weitertransportes in Richtung der Umlenkfördereinheit, und damit in Richtung des Einzugs der Erntemaschine, an den angetriebenen Querförderer zu übergeben. Diese Querförderer bestehen aus wenigstens zwei nebeneinander angeordneten Querfördersegmenten, die als Bandförderer oder Fördertrommeln ausgebildet sein können und die über entsprechend ausgebildete Mitnehmerelemente zum Weitertransport der Pflanzenstängel verfügen. Dadurch, dass ein Querförderer zumindest zwei Fördersegmente umfasst, bilden diese einen Übergabebereich, innerhalb dessen das zu fördernde Gut von einem Querfördersegment auf das jeweils benachbarte übergeben wird.

Ausgehend von diesem Stand der Technik ist die erfinderische Gedankenführung darauf gerichtet, die Leistungsfähigkeit eines derartig ausgebildeten Vorsatzgerätes zu steigern und prozesssicherer zu gestalten.

Leistungssteigerungerungen bedeuten größere Massendurchsätze, entweder bedingt durch Steigerung der Fahrgeschwindigkeit oder durch Vergrößerung der Arbeitsbreite. Auch kann es bedeuten, beides gleichzeitig verwirklichen zu wollen.

Bei großen Arbeitsbreiten gilt es neben der Funktionssicherheit auch darauf zu achten, dass die sichere Handhabung derartiger Vorsatzgeräte in Verbindung mit dem Trägerfahrzeug gewährleistet ist und dass die Energiebilanz in Relation zur Arbeitsbreite günstiger ausfällt..

Unter diesem Gesichtspunkt ist es weiterhin eine erfinderische Aufgabenstellung die Leistung eines derartigen Gerätes durch Vergrößerung der bekannten Arbeitsbreiten mit einer möglichst geringen Anzahl von Schneidund Förderelementen als Mäh- und Fördertrommein zu schaffen, welches eben einen sicheren Transport des Ernteguts im Querförderbereich voraussetzt. Ein weiteres angestrebtes Ziel der Erfindung stellt somit die Verbesserung der Wirtschaftlichkeit derartiger Vorsatzgeräte dar.

Aufgabe der Erfindung ist es daher, ein Erntegerät der vorgenannten Art zum Ernten von Mais oder artverwandtem stängeligem Erntegut derart vorzuschlagen, dass seine Wirtschaftlichkeit und seine Handhabbarkeit auch und gerade bei großen Arbeitsbreiten und großen Flächenleistungen verbessert wird.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung ermöglicht dieses durch Reduktion der inneren Reibung innerhalb des Gutstroms aber auch in Verbindung mit den Leitelementen, die den Gutstrom führen und in seinen Bewegungsmöglichkeiten innerhalb der Förderkanäle begrenzen. Als vorteilhaft wird dabei angesehen, dieses mit einer möglichst geringen Anzahl von Mäh- und Förderelementen zu bewerkstelligen, um die Anzahl der Antriebselemente, wie beispielsweise Winkelgetriebe und Wellenverbindungen möglichst gering zu halten.

Dabei wird die Rückwand zur Förderung der Maispflanzen großteils aus um aufrechte Drehachsen umlaufend angetriebene Förderelemente als Teil des Querförderers gebildet, die fördernd und beschleunigend auf den Erntegutstrom einwirken, wobei zumindest die Umlenkförderelemente als Teil des Querförderers in ihrer Fördergeschwindigkeit variabel sind, wodurch diese den unterschiedlichen Massendurchsätzen und den unterschiedlichen Häckselgutlängen angepasst werden können.

Dabei wird das Förderverhalten des Querförderers gleichzeitig verbessert durch die erfinderische Ausgestaltung der Förderzähne und Fördertaschen der Querförderelemente und durch deren Zusammenwirken. Entscheidend für die reibungsarme, quetschfreie und damit störungsfreie Übergabe der Maisstängel an den jeweiligen Übergabestellen der Förderelemente untereinander, ist dabei die Ausgestaltung der Zahnflanken in Verbindung mit der Überdeckungsrate der sich gegenseitig überdeckenden Förderzähne zweier benachbarter Förderelemente.

Erreicht wird das sichere Auskämmen der Maispflanzen aus den Fördertaschen der jeweils benachbarten Förderelemente dadurch, dass die Überdeckungsraten der Zähnezahlen zweier miteinander in Eingriff stehender Förderelemente so gesetzt sind, dass die Überdeckungsrate des auskämmenden Förderelementes größer ist, als die Überdeckungsrate des übergebenden Förderelementes.

Die Überdeckungsrate ist dabei definiert als das Produkt aus Zähnezahl und Winkelgeschwindigkeit eines Förderelementes.

Die Außenkontur der rotierenden Querförderelemente bilden somit eine dem Wesen nach lückenlose, wenngleich keine geschlossene Fläche aufweisende Begrenzungswand, zur Führung der Maisstängel auf dem Wege der Querförderung in Richtung des Einzugsbereichs. Dabei geht von dieser "virtuellen" Rückwand nicht nur eine führende, sondern auch eine fördernde und beschleunigende Funktion und Wirkung aus.

In einer weiteren Ausgestaltung der Erfindung kann durch variable unterschiedliche Winkelgeschwindigkeiten der rotierenden Förderelemente des Querförderers auch Einfluss genommen werden auf die Fördergeschwindigkeit des Gutstroms. Dieses kann vorteilhaft genutzt werden um beispielsweise Unterschiede im Massendurchsatz von Erntegutströmen ausgleichen zu können, um dadurch einerseits einen Förderstromabriss des Gutstroms und andererseits Verstopfungen im laufenden Gutstrom entgegen wirken zu können.

Die Änderung der Winkelgeschwindigkeiten ist gleichbedeutend mit der Änderung der Drehzahlen der Förderelemente eines Querförderers. Diese Drehzahländerungen können stufenlos, beispielsweise durch eine entsprechende Ansteuerung von hydrostatischen Antrieben oder auch beispielsweise stufenweise durch ein Schaltgetriebe im Antriebsstrang der Förderelemente eines Querförderers ausgeführt sein. Somit kann die Fördergeschwindigkeit den Förderverhältnissen angepasst, d.h. verändert werden.

Diese zuvor dargelegten erfinderischen Merkmale stellen damit einen erheblichen Beitrag zur Verbesserung der Wirtschaftlichkeit eines derartigen Vorsatzgerätes dar.

An Hand eines nachfolgend dargestellten Ausführungsbeispiels soll die Erfindung näher dargestellt und erläutert werden.

Es zeigen.

Fig.1 Ein Vorsatzgerät nach der Erfindung in einer perspektivischen Darstellung

Fig.1a Einen vergrößerten Ausschnitt des Vorsatzgerätes gemäß Fig.1

Fig.2 Ein Vorsatzgerät nach der Erfindung analog Fig.1 in einer axonometrischen Darstellung als Draufsicht auf die Arbeitsebene

Fig.2a zeigt den vergrößerten Ausschnitt analog Fig. 1a in der axonometrischen Darstellung analog Fig. 2

Fig.2b zeigt den vergrößerten Ausschnitt analog Fig. 2a in vereinfachter Darstellung

Fig.2d Ein Vorsatzgerät nach der Erfindung in einer perspektivischen Darstellung als Variante des in Fig.1 dargestellten Vorsatzgerätes.

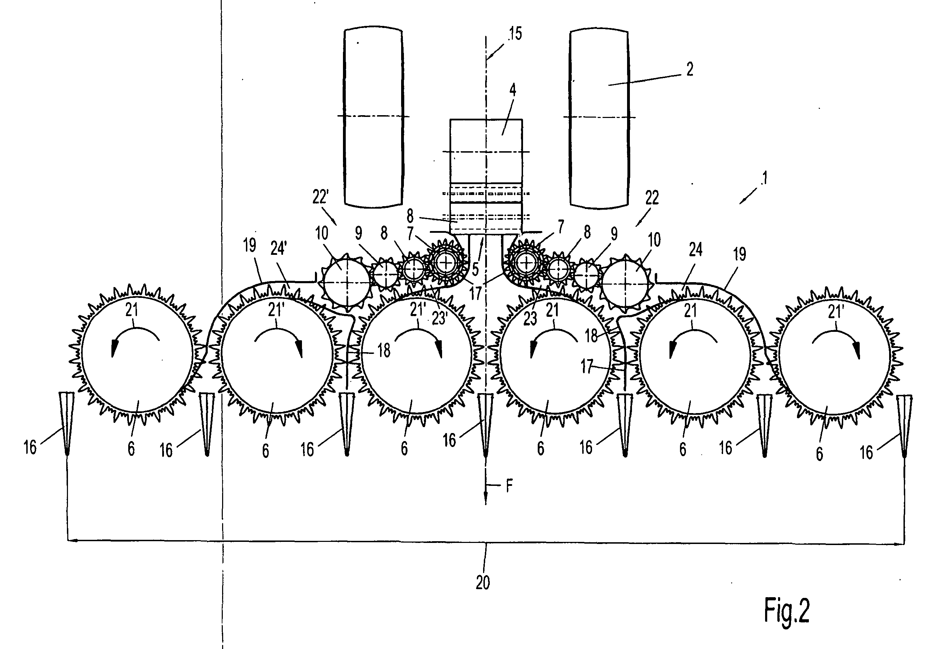

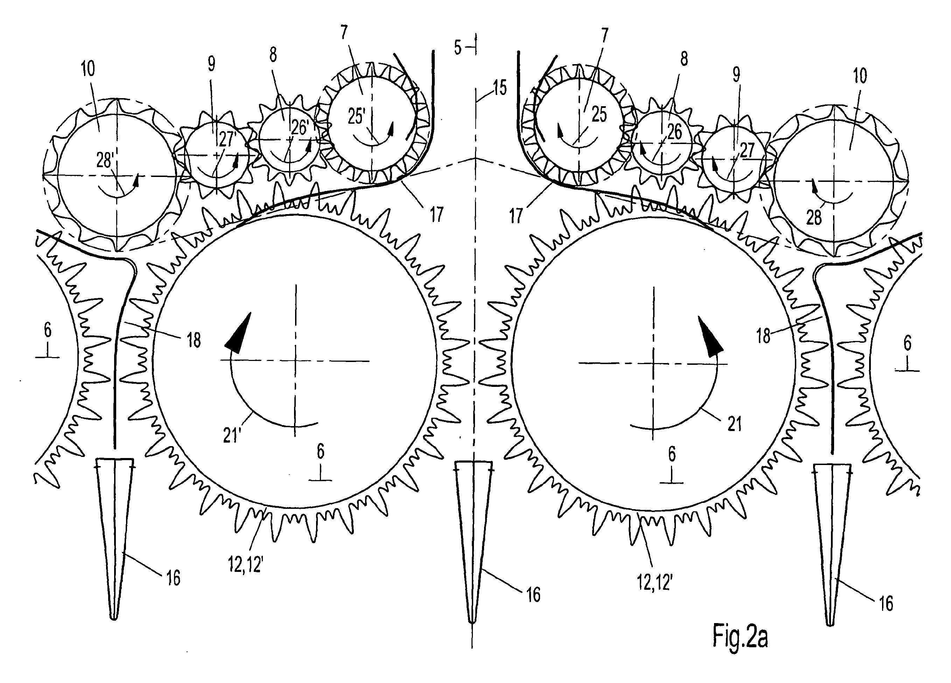

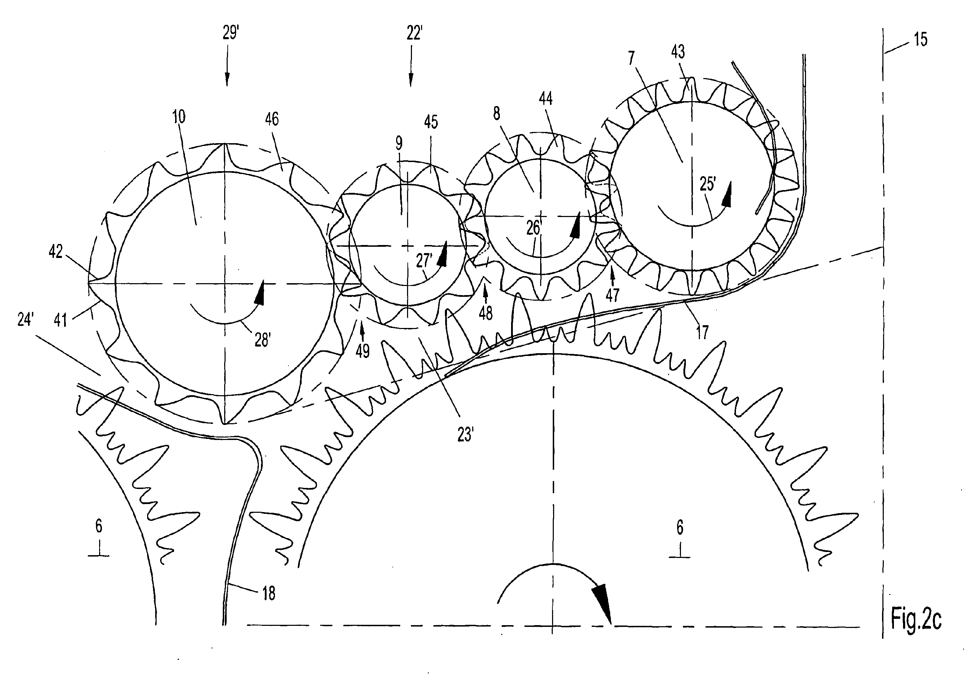

Fig.2c zeigt den vergrößerten Ausschnitt aus Fig.2a

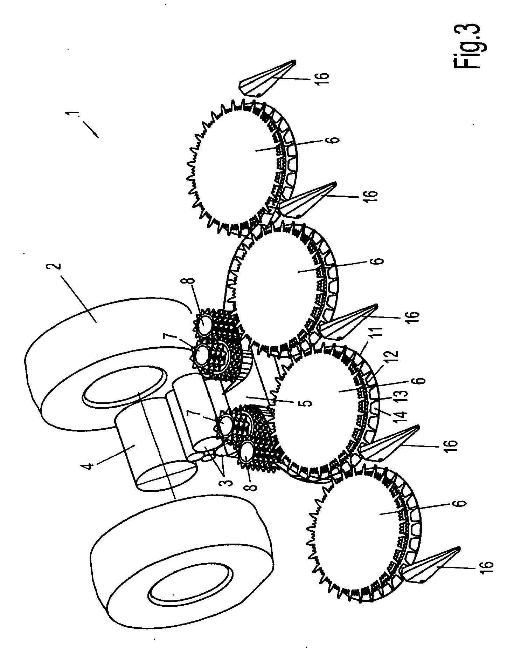

Fig.3 Ein anderes Vorsatzgerät nach der Erfindung in einer isometrischen Darstellung

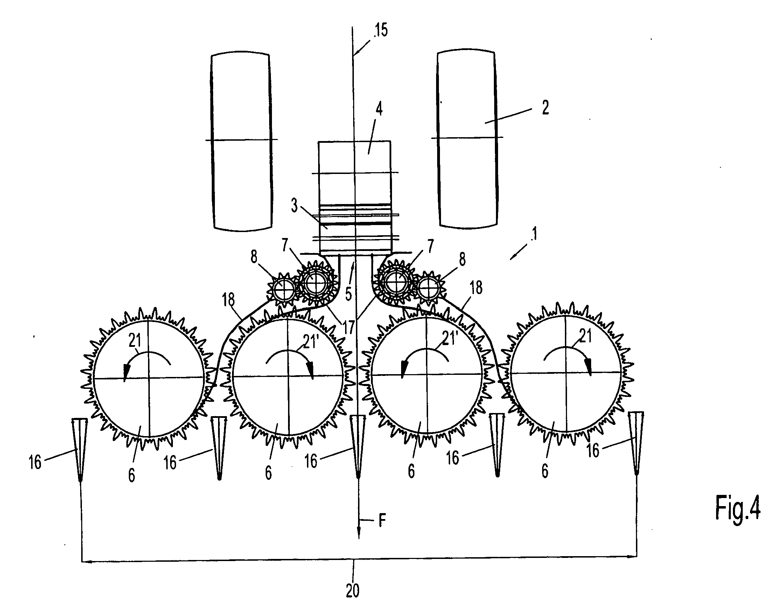

Fig.4 Ein Vorsatzgerät nach der Erfindung gemäß Fig.3 in einer Draufsicht auf die Arbeitsebene

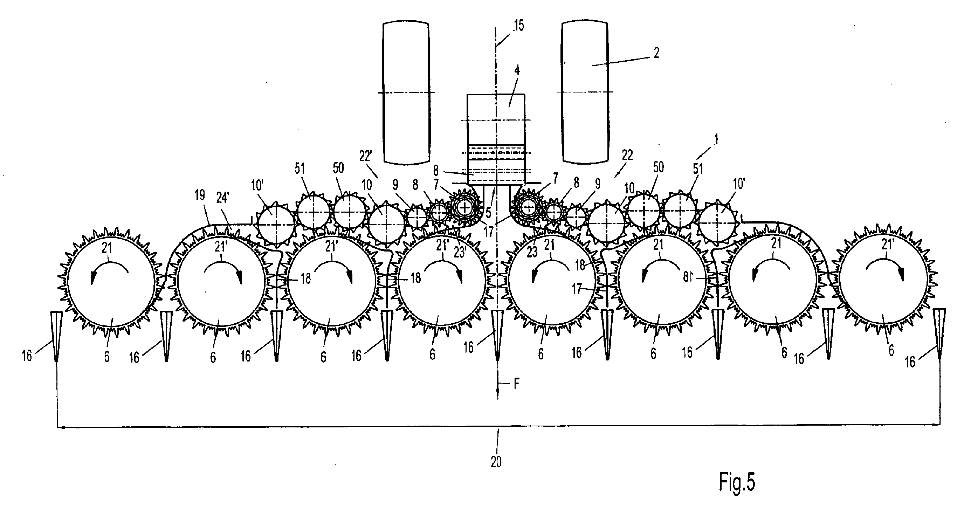

Fig.5 Ein weiteres Vorsatzgerät nach der Erfindung gemäß Fig.3 in einer Draufsicht auf die Arbeitsebene

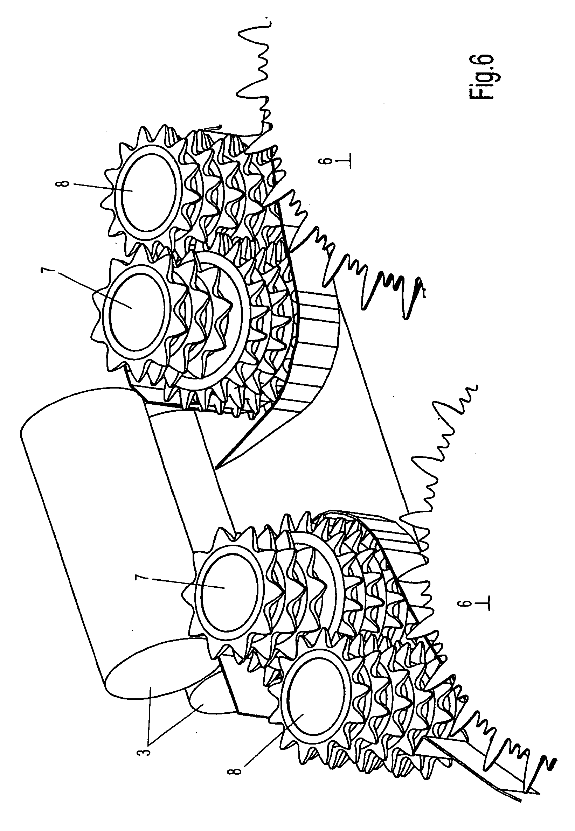

Fig.6 Zwei benachbarte Förderelemente in einer vergrößerten Darstellung

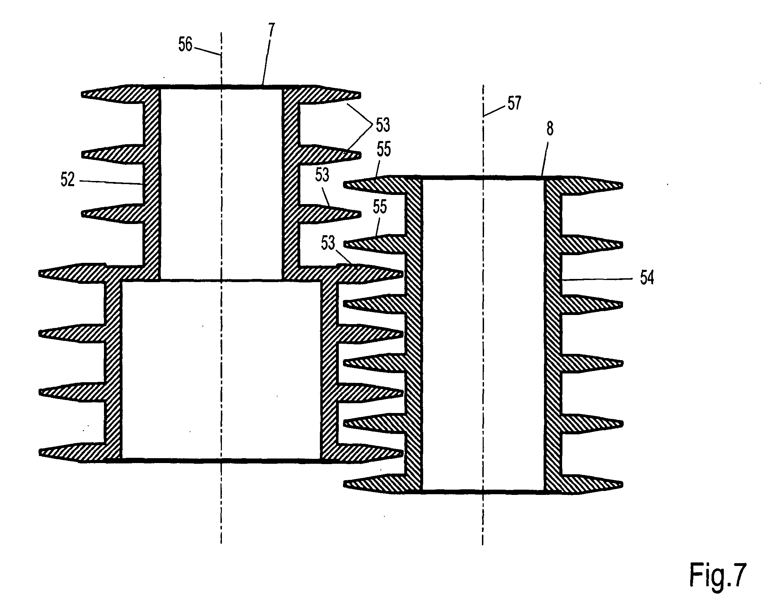

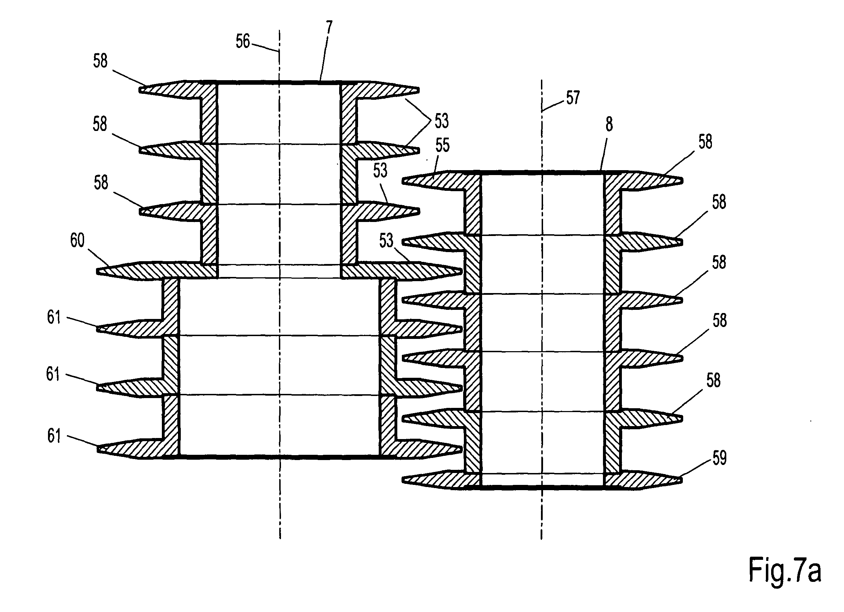

Fig.7 Zwei benachbarte Förderelemente gemäß Fig. 6 in einer Schnittdarstellung

Fig.7a Zwei benachbarte Förderelemente gemäß Fig. 7 in einer Schnittdarstellung, bestehend aus übereinander geschichteten Einzelelementen

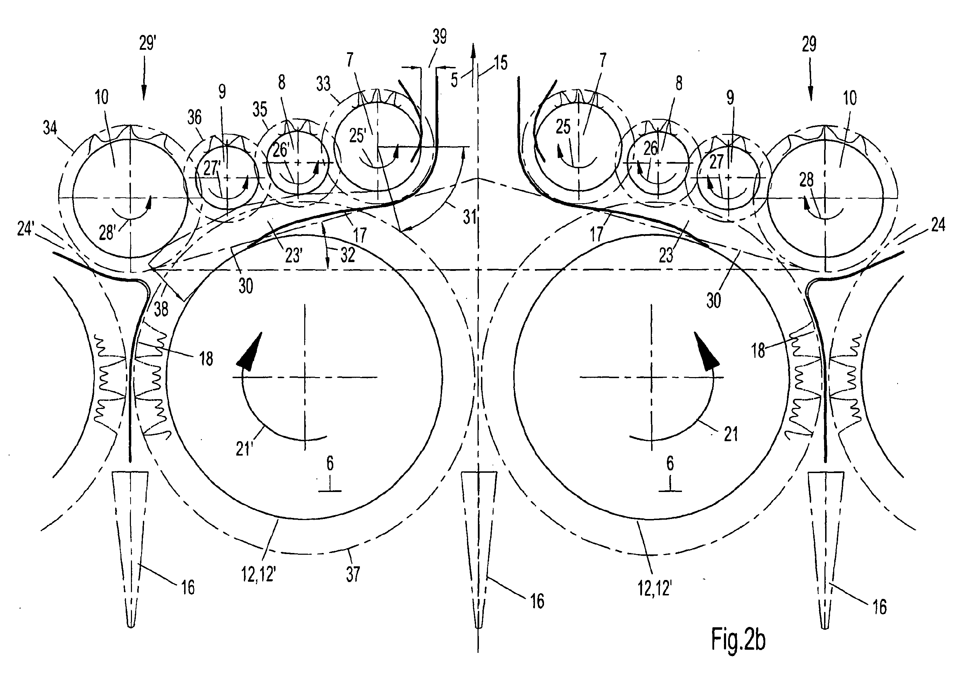

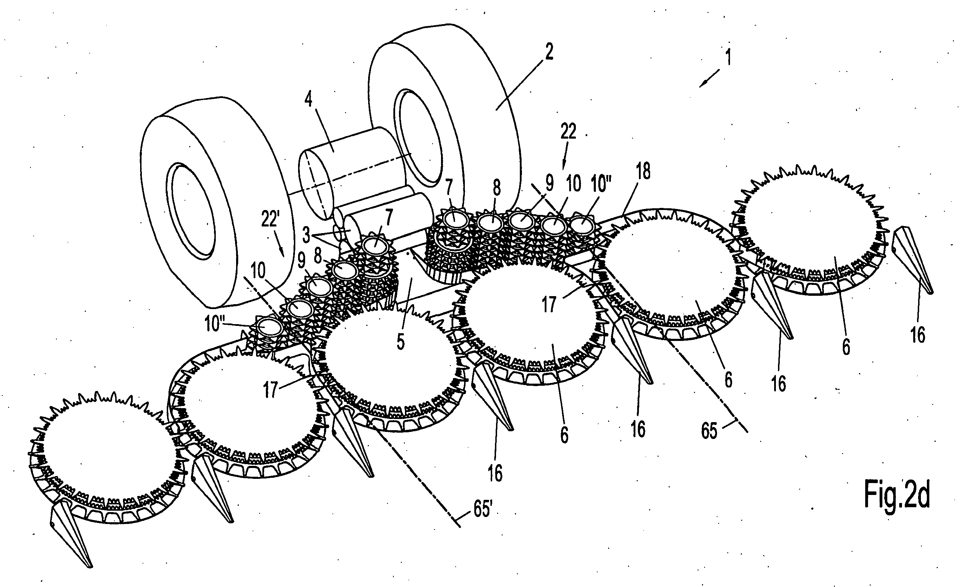

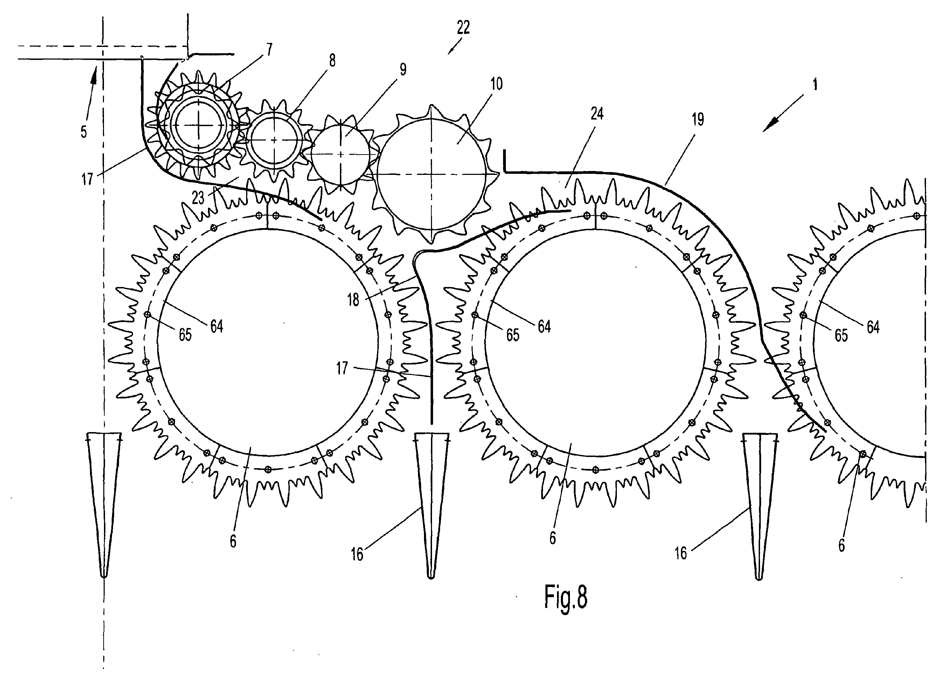

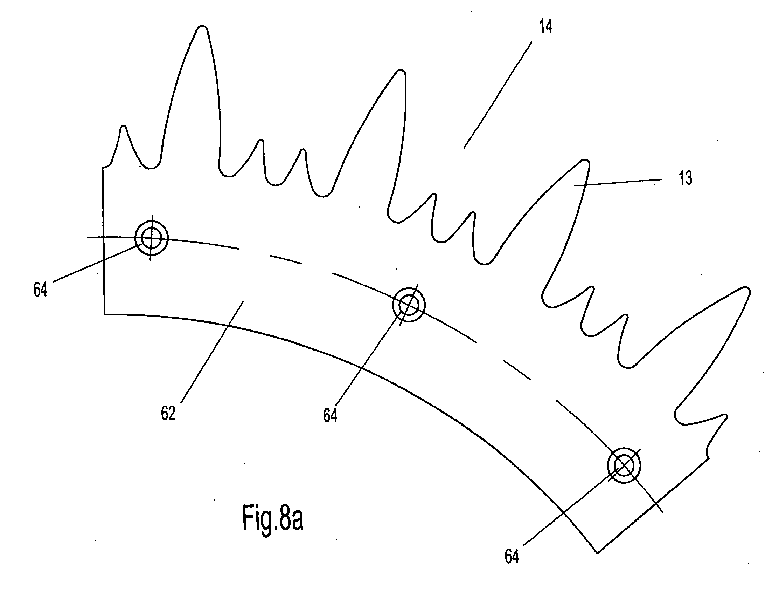

Fig.8 Ein vergrößerter Ausschnitt aus Fig. 2, der Mäh- und Förderscheiben, deren Förderscheiben mit Zahnsegmenten besetzt sind.

Fig.8a Ein einzelnes und vergrößert dargestelltes Zahnsegment gemäß Fig. 8

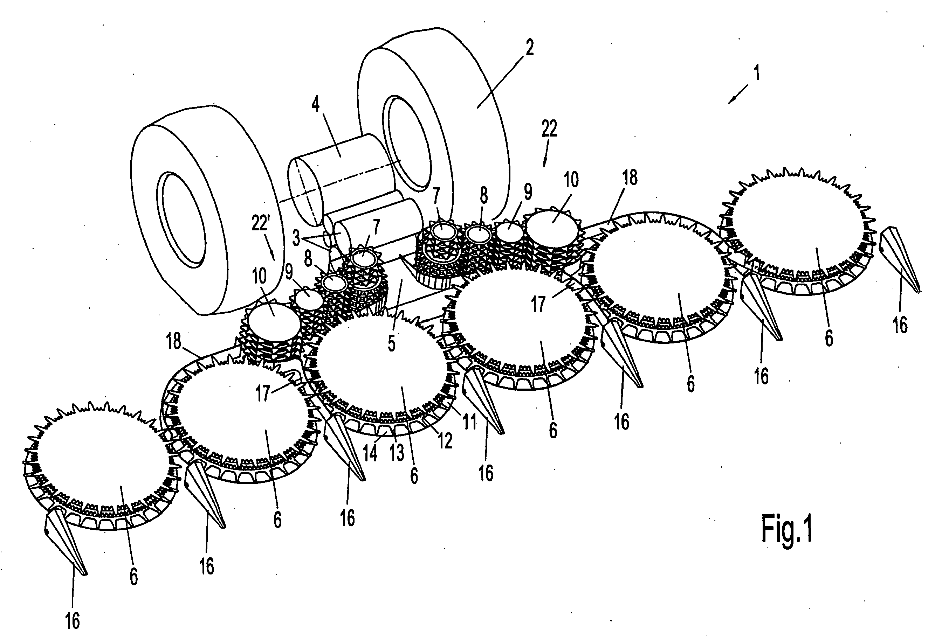

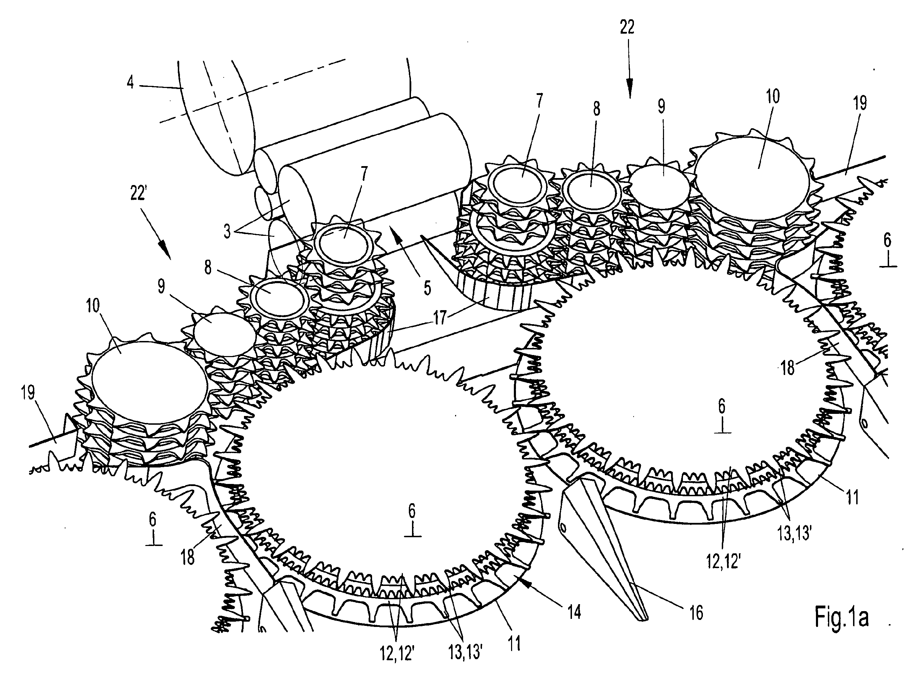

Fig.1 zeigt ein Ausführungsbeispiel eines Vorsatzgerätes 1 zum Ernten von Mais nach der Erfindung in einer isometrischen Darstellung in einer Schrägansicht von oben etwa auf die Arbeitsebene. Es besteht im wesentlichen aus den in Reihe nebeneinander quer zur Fahrtrichtung angeordneten umlaufend angetriebenen Mäh- und Förderelementen 6, die in einer, aus Vereinfachungsgründen und der besseren Übersichtlichkeit halber, nicht dargestellten Rahmenkonstruktion gelagert sind. Diese Rahmenkonstruktion ist in bekannter Weise mit dem Trägerfahrzeug (2) als Feldhäcksler antriebsseitig gekoppelt.

Fig.1a zeigt einen vergrößerten Ausschnitt aus der gleichen Perspektive wie Fig.1, und insbesondere den Bereich um den Einzugsbereich 5 mit den dem Häcksler zugehörigen Einzugswalzen 3 und der Häckslertrommel 4, und den beiden Querförderern 22,22'.

Fig.2 zeigt das Vorsatzgerät nach der Erfindung gemäß Fig.1 in einer axionometrischen Projektion von oben auf die Arbeitsebene in einer Draufsicht.

Fig.2a zeigt analog Fig. 1a den gleichen und vergrößerten Ausschnitt in einer axionometrischen Projektion und gleichermaßen auf die Arbeitsebene in einer Draufsicht.

Fig.2b zeigt den gleichen Ausschnitt analog Fig.2a, jedoch zur weiteren Erläuterung und zum besseren Verständnis der Erfindung in vereinfachter Darstellung.

Fig.2c zeigt den vergrößerten Ausschnitt aus Fig.2a und insbesondere Details des Querförderers 22' mit seinen verschiedenen Förderelementen 7,8,9,10 zur Erläuterung der weiteren Ausgestaltung der Förderelemente 7,8,9,10. und des Förderkanals 23.

Fig.2d zeigt ein Vorsatzgerät nach der Erfindung in einer perspektivischen Darstellung als Variante des in Fig.1 dargestellten Vorsatzgerätes Der Unterschied zu der in Fig.1 dargestellten Ausführung besteht darin, dass in diesem Ausführungsbeispiel in dem hinteren Zwickelbereich 29,29' statt einem großen Förderelement 10 nunmehr zwei im Durchmesser kleinere nebeneinanderliegende Förderelemente 10 und 10" angeordnet sind. Dieses ist dann von Vorteil ist, wenn zur Verminderung der Transportbreite in an sich bekannter Weise die Klappachsen 65,65' von Klappgelenke zwischen diesen beiden Förderelemente 10 und 10' liegen, so dass das weiter außen liegende Förderelement 10" an dem Klappvorgang teilnehmen kann.

Das Ausführungsbeispiel gemäß Fig.1 des Vorsatzgerätes weißt sechs Mäh- und Einzugsscheiben 6 beidseitig der vertikalen Längsmittelebene 15 auf, wobei beidseitig der Längsmittelebene 15 Querförderer 22,22' angeordnet sind. Jeder Querförderer 22,22' umfasst vier um aufrechte Achsen rotierend angetriebene Förderelemente 7,8,9,10.

Jeder der beiden Querförderer 22,22' beinhaltet die Förderelemente 7,8,9,10, wobei dem Förderelement 7 gleichermaßen die Funktion der Umlenkfördereinheit zukommt.

Ein Mäh- und Förderelement 6 besteht im Wesentlichen aus einer Messerscheibe 11 mit zwei beabstandeten Förderscheiben 12,12', an deren Umfängen Förderzinken 13,13' und Fördertaschen 14,14' verteilt sind. Als Außenbegrenzung aber auch in den vorderen Zwickelbereichen zweier benachbarter Mäh- und Einzugsscheiben 6 sind Teilerspitzen 16 in Fahrtrichtung F vorgelagert.

Mit der dargestellten Konfiguration der sechs Mäh- und Fördereinheiten 6 und den Querförderern 22,22' können Arbeitsbreiten 20 von etwa 7,5 m bis etwa 10,5 m abgedeckt werden. Das dargestellte Ausführungsbeispiel soll eine Arbeitsbreite 20 von vorzugsweise 9m beinhalten und ist für das reihenlose Mähen und Ernten von Maispflanzen vorgesehen.

Die Drehrichtungen 21,21' der Mäh- und Einzugsscheiben 6 bzw. die Drehrichtungen 25,25',26,26', 27,27',28,28' der Förderelemente 7,8,9,10 sind durch Drehrichtungspfeile dargestellt, welche auch gleichzeitig die Förderrichtung der abgetrennten Maispflanzen vorgeben.

Die von den Fördertaschen 14, aufgenommenen abgemähten Maispflanzen werden zunächst auf der Umlaufbahn der Fördertaschen 14,14' bzw. der Förderzinken 13,13' eine Wegstrecke nach hinten als Bogenmaß entgegen der Fahrtrichtung F und dabei auch in Richtung der Vertikalen Längsmittelebene gefördert, und den Übergabestellen bedingt durch die auskämmende Wirkung der an den Enden als Abstreifer ausgebildeten Führungswände 17,18,19, aus den Fördertaschen der Förderscheiben herausgedrängt und dadurch in die entsprechenden Führungskanäle 23,23' bzw. 24,24' eingeleitet.

Im hinteren Zwickelbereich der links bzw. rechts der vertikalen Längsmittelebene benachbarten ersten zwei Mäh- und Förderscheiben 6 ist das erste Förderelement 10 des Querförderers 22,22' angeordnet, das dort aktiv auf die in diesem Zwickelbereich zusammentreffenden Gutströme der linken bzw. rechten Hälfte der Arbeitsbreite 20 querfördernd und verdichtend einwirkt. Verdichtend insofern, als dass der gesamte Gutstrom der Hälfte der Arbeitsbreite 20 sich nunmehr in dem Förderkanal 23,23 einfindet und dort zusammengeführt und von dem Querförderer 22,22' in Richtung Einzugsbereich 5 gefördert wird.

Dabei sind die Förderelemente 7,8,9,10 des Querförderers 22,22' so hinter der ersten links und rechts der vertikalen Längsmittelebene benachbarten Mäh- und Förderscheibe 6 angeordnet, dass die Verbindungstangente 30 als gemeinsame Tangente angelegt an die Flugkreise 33,34 der Zahnköpfe der Mitnehmerzähne der Förderelemente 7 und 10, einen spitzen Steigungswinkel 32 gegenüber der Lotrechten 33 aufweist, welche auf die vertikale Längsmittelebene 15 gerichtet ist. Dieses beinhaltet den Vorteil, dass der Umlenkwinkel 31, den der Gutstrom auf seiner Förderbahn von der Querförderung im Förderkanal 23 in den Bereich des Einzugs 15 durchlaufen muss, unterhalb 90° liegt, welches also insgesamt den Umlenkwinkel 31 verkleinert. Dieses dient somit insgesamt der Verbesserung des Gutflusses.

Dabei sind die Umlenkelemente 7,8,9,10 mit unterschiedlichen Zähnezahlen bei teils unterschiedlichen Durchmessern bestückt. Da der Gutstrom in Richtung seiner Querförderung auf den Einzugsbereich 5 verdichtet werden soll, ist der Förderkanal 23 so bemessen, dass das Stichmaß 38 sich verengt auf das Stichmaß 39, d.h. reduziert. Gleichzeitig erhöht sich dabei die Fördergeschwindigkeit des zu fördernden Gutstroms dadurch, dass die Förderelemente 7,8,9,10 in ihren Winkelgeschwindigkeiten in Verbindung mit der Zähnezahl des jeweiligen Förderelementes so ausgelegt sind, dass die Überdeckungsrate der Zähne von außen nach innen, also vom Förderelement 10 in Richtung Förderelement 7, von Förderelement zu Förderelement zunimmt.

Die Überdeckungsrate $R_i$ ist dabei definiert als
$R_i = \omega_i * z_i$
mit

$\omega_i$ = Winkelgeschwindigkeit des betrachteten Förderelementes i

$z_i$ = Zähnezahl des betrachteten Förderelementes i

Damit gilt für

$$\text{Förderelement 7:} \quad R_7 = \omega_7 * z_7$$

$$\text{Förderelement 8:} \quad R_8 = \omega_8 * z_8$$

$$\text{Förderelement 9:} \quad R_9 = \omega_9 * z_9$$

$$\text{Förderelement 10:} \quad R_{10} = \omega_{10} * z_{10}$$

Erfindungsgemäß ist die Bedingung der beschleunigten Förderung dann erfüllt, wenn die Förderungsgeschwindigkeit innerhalb des Förderkanals durch Einwirkung der Förderelemente des Querförderers 22,22' zunimmt. Dabei gilt als weiterer erfinderischer Vorteil, wenn die Bedingung erfüllt ist

$$R_7 > R_8 > R_9 > R_{10}$$

Die Konstruktive Auslegung der Förderelemente hinsichtlich dieser Parameter unter Berücksichtigung dieser zuvor dargelegten Gesetzmäßigkeiten unterstützt das sichere Auskämmen der Maisstängel aus den Fördertaschen des jeweils vorgelagerten Förderelementes und wirkt gleichzeitig beschleunigend und verdichtend auf den Gutstrom, gebildet aus den Pflanzenstängeln der Maispflanzen oder artverwandtem Erntegut, ein.

Fig.3 bzw. Fig. 4 zeigt ein weiteres Vorsatzgerät nach der Erfindung, Fig.3 in perspektivischer Darstellung und Fig.4 in einer Draufsicht auf die Arbeitsebene mit vier Mäh- und Förderscheiben 6. Dabei kann ein Querförderer 22,22' beispielsweise auch auf zwei Förderelemente 7,8 nach der Erfindung reduziert sein. Die Arbeitsbreite einer derartigen Konfiguration mit vier Mäh- und Förderscheiben 6. kann beispielsweise zwischen 4,5m und 7,5 m, vorzugsweise bei 6 m liegen.

Fig.5 zeigt ein weiteres Vorsatzgerät nach der Erfindung in einer Draufsicht auf die Arbeitsebene mit acht Mäh- und Förderscheiben 6. In dem Ausführungsbeispiel beinhaltet der Querförderer 22,22' beispielsweise sieben Förderelemente 7,8,9,10,10',50,51' nach der Erfindung. Die Arbeitsbreite einer derartigen Konfiguration kann beispielsweise zwischen 10,5m und 13,5 m, vorzugsweise bei 12 m liegen.

Fig.6 zeigt zwei benachbarte Förderelemente . 7,8 in einer vergrößerten Darstellung und Fig.7 diese gemäß Fig. 6 in einer Schnittdarstellung durch die von den Rotationsachsen definierten Ebene. In Fig. 7 sind die Förderelemente als freie Körper, d.h. ohne Lager und ohne Antriebselemente dargestellt. Dabei besteht das Förderelement 7 aus dem trommelförmigen Rotationskörper 52 mit den Förderzähnen 53, und das Förderelement 8 aus dem trommelförmigen Rotationskörper 54 mit den Förderzähnen 55. Die Förderzähne sind am Umfang der jeweiligen trommelförmigen Rotationskörper 52,54 in verschiedenen Ebenen angeordnet und überdecken sich dabei teilweise während ihrer Umlaufbahn in verschiedenen übereinander liegenden Ebenen. Der gesamte Rotationskörper kann monolithisch ausgeführt sein, wie in Fig.7 dargestellt oder, wie in Fig.7a dargestellt, alternativ aus scheiben- und ringförmigen Elementen 58,59,60,61, axial verspann- oder verschraubbar, zusammengesetzt sein.

In einer weiteren vorteilhaften Ausgestaltung der Erfindung können die Förderzähne der Förderscheiben 6 aus Zahnsegmenten 62, wie in Fig.8 und Fig.8a dargestellt, bestehen. Diese werden dann mittels Befestigungsschrauben 63, beispielsweise ausgebildet als Senkkopfschrauben in Senkbohrungen 64 eingelassen, mit den Grundkörpern der Mäh- und Förderscheiben 6 verschraubt, so dass sie bei Beschädigungen oder Verschleiß segmentweise ausgewechselt werden können.

**Bezugszeichenliste:**

| | |
|---|---|
| 1 | Vorsatzgerät |
| 2 | Vorderräder des Trägerfahrzeugs (Feldhäcksler) |
| 3 | Einzugswalzen |

| | |
|---|---|
| 4 | Häckslertrommel |
| 5 | Einzugsbereich |
| 6 | Mäh- und Förderelement |
| 7 | Förderelement (Umlenkförderelement) |
| 8 | Förderelement (Querförderelement) |
| 9 | Förderelement (Querförderelement) |
| 10,10',10" | Förderelement (Querförderelement im hinteren Zwickelbereich) |
| 11 | Messerscheibe |
| 12,12' | Förderscheibe |
| 13.13' | Förderzinken |
| 14,14' | Fördertaschen |
| 15 | Vertikale Längsmittelebene |
| 16 | Teilerspitzen |
| 17 | Führungswand |
| 18 | Führungswand |
| 19 | Führungswand |
| 20 | Arbeitsbreite |
| 21,21' | Drehrichtung |
| 22,22' | Querförderer |
| 23,23' | Förderkanal |
| 24,24' | Förderkanal |
| 25,25' | Drehrichtung |
| 26,26' | Drehrichtung |
| 27,27' | Drehrichtung |
| 28,28' | Drehrichtung |
| 29,29' | hinterer Zwickelbereich |
| 30 | Verbindungstangente |
| 31 | Umlenkwinkel |
| 32 | Steigungswinkel |
| 33 | Flugkreis |
| 34 | Flugkreis |
| 35 | Flugkreis |
| 36 | Flugkreis |
| 37 | Flugkreis |
| 38 | Stichmaß |
| 40 | Stichmaß |
| 41 | abgebende Zahnflanke |
| 42 | aufnehmende Zahnflanke |
| 43 | Mitnahmeelement |
| 44 | Mitnahmeelement |
| 45 | Mitnahmeelement |
| 46 | Mitnahmeelement |
| 47 | Übergabestelle bzw. Übergabebereich |
| 48 | Übergabestelle bzw. Übergabebereich |
| 49 | Übergabestelle bzw. Übergabebereich |
| 50 | Förderelement (Umlenkförderelement) |
| 51 | Förderelement (Umlenkförderelement) |
| 52 | trommelförmiger Rotationskörper |
| 53 | Förderzahn |
| 54 | trommelförmiger Rotationskörper |
| 55 | Förderzahn |
| 56 | Rotationsachse |
| 57 | Rotationsachse |
| 58 | ringförmiges Element |
| 59 | ringförmiges Element |
| 60 | ringförmiges Element |
| 61 | ringförmiges Element |
| 62 | Zahnsegment |
| 63 | Befestigungsschrauben |
| 64 | Senkbohrung |
| 65,65' | Klappachsen |
| F | Fahrtrichtung |

**Patentansprüche**

1. Vorsatzgerät (1) für landwirtschaftliche Erntemaschinen (2) zum Abtrennen, Aufnehmen und Weiterführen eines Erntegutstroms aus stängellgem Halmgut, insbesondere Malspflanzen, mit wenigstens vier in Arbeitsstellung quer zur Fahrtrichtung (F) beabstandeten, um Hochachsen umlaufend angetriebenen Mäh- und Förderelementen (6), wobei den Mäh- und Förderelementen (6) im rückwärtigen Bereich um Hochachsen umlaufend angetriebene Querförderer (22 und 22') nachgeordnet sind, und jeder Querförderer (22,22') aus wenigstens zwei umlaufend angetriebenen mit Mitnahmeelementen (43,44,45) bestückten Förderelementen (7,8) besteht, die eine gemeinsame Übergabestelle bilden, wobei das innenliegende Förderelement (7) gleichzeitig als ein dem Einzugsbereich (5) des Trägerfahrzeugs (2) zuarbeitendes Umlenkförderelement ausgebildet ist, **dadurch gekennzeichnet, dass** wenigstens die Antriebsdrehzahl der Innenliegenden Förderelemente (7) der Einzugsgeschwindigkeit der Einzugswalzen (3) des Trägerfahrzeugs (2) variabel angepasst werden kann.

2. Vorsatzgerät nach Anspruch 1, **dadurch gekennzeichnet, dass** die Antriebsdrehzahlen mehrerer Förderelemente (7,8,9,10,10',10") eines Querförderers (22,22') der Einzugsgeschwindigkeit der Einzugswalzen (3) des Trägerfahrzeugs (2) variabel angepasst werden können.

3. Vorsatzgerät nach Anspruch 1 und 2, **dadurch gekennzeichnet, dass** die Überdeckungsraten ($R_1$) der Mitnahmeelemente (43,44,45) von wenigstens zwei benachbarten, eine Übergabestelle bildenden Förderelemente (7,8,9,10), ihrem Betrage nach unterschiedlich groß sind.

4. Vorsatzgerät nach Anspruch 3, **dadurch gekennzeichnet, dass** die Überdeckungsrate ($R_1$) eines weiter außenllegenden Förderelements (8,9,10) jeweils kleiner ist, als die Überdeckungsrate ($R_1$) des jeweils benachbarten weiter Innenliegenden Förderelements (7,8,9).

5. Vorsatzgerät nach Anspruch 1 bis 5, **dadurch gekennzeichnet, dass** die Projektion der Flugkreise (34,35,36,37) der Mitnehmerelemente (43,44,45,46) der Rotationskörper sich teilweise überdecken.

**6.** Vorsatzgerät nach Anspruch 4, **dadurch gekennzeichnet, dass** die Wirkungsebenen der sich überdeckenden Mitnehmerelemeriten (43,44,45,46) der zweier benachbarten Förderelemente (7,8,0,10) unterschiedliche Höhenlagen in bezug auf ihre Rotationsachsen einnehmen.

**7.** Vorsatzgerät nach Anspruch 1 bis 5, **dadurch gekennzeichnet, dass** die Mitnehmerelemente (43,44,45,46) In ihren Höhenlagen in bezug auf die Rotationsachse ihres Förderelementes (7,8,9,10) längs einer gedachten gewendelten Mantellinie versetzt zueinander angeordnet sind.

**8.** Vorsatzgerät nach Anspruch 1 in Verbindung mit einem oder mehreren der vorhergehenden Ansprüche, **dadurch gekennzeichnet, dass** das erste Innenliegende Förderelement (7) der Querförderer (22,22'), welches dem Einzugsbereich der Einschubwalzen links. bzw. rechts der vertikalen Längsmittlebenen (15) am nächsten liegt, sowohl eine Querförder-als auch Umlenkförderfunktion in Richtung der Einzugswalzen (3) aufweist.

**9.** Vorsatzgerät nach Anspruch 1 in Verbindung mit einem oder mehreren der vorhergehenden Ansprüche, **dadurch gekennzeichnet, dass** die Verbindungstangente (30) des Querförderers (22,22') einen spitzen Steigungswinkel (32) gegenüber der Lotrechten zur Längsmittelebene (15) aufweist, wobei der Umlenkwinkel (31) des Umlenkelements (10) kleiner als 90° ist.

**10.** Vorsatzgerät nach Anspruch 1 in Verbindung mit einem oder mehreren der vorhergehenden Ansprüche, **dadurch gekennzeichnet, dass** das Förderelement (10) In wenigstens einem der hinteren Zwikkelbereiche (29,29') des Vorsatzgerätes (1) der Mäh- und Einzugsschelben (6) eine fördernde und Rückwand bildende Funktion eines Förderkanals (24,24',23,23') besitzt.

**11.** Vorsatzgerät nach Anspruch 1 In Verbindung mit einem oder mehreren der vorhergehenden Ansprüche, **dadurch gekennzeichnet, dass** ein Vorsatz gerät (1) wenigstens zwei Querförderer (22,22') beidseitig der vertikalen Längsmittelebenen (15) umfasst.

**12.** Vorsatzgerät nach Anspruch 1 in Verbindung mit einem oder mehreren der vorhergehenden Ansprüche, **dadurch gekennzeichnet, dass** das Vorsatzgerät (1) wenigstens vier Mäh- und Einzugstrommeln (6) umfasst.

**13.** Vorsatzgerät nach Anspruch 12, **dadurch gekennzeichnet, dass** das Vorsatzgerät (1) vier Mäh- und Einzugstrommeln (6) umfasst und eine Arbeitsbreite von etwa 4,5m bis 7,5m. vorzugsweise etwa 6m beinhaltet.

**14.** Vorsatzgerät nach Anspruch 12, **dadurch gekennzeichnet, dass** das Vorsatzgerät (1) sechs Mäh- und Einzugstrommeln umfasst und eine Arbeitsbreite von etwa 7,5m bis 10,5m, vorzugsweise etwa 9m beinhaltet.

**15.** Vorsatzgerät nach Anspruch 12, **dadurch gekennzeichnet, dass** das Vorsatzgerät (1) acht Mäh- und Einzugstrommeln umfasst und eine Arbeitsbreite von etwa 10,5m bis 13,5m, vorzugsweise etwa 12 m beinhaltet.

## Claims

**1.** A front-mounted attachment (1) for agricultural harvesting machines (2) for separating, picking up and passing on a flow of crop material comprising stalked material, in particular maize plants, comprising at least four cutting and conveyor elements (6) which in the working position are spaced transversely relative to the travel direction (F) and which are driven in rotation about vertical axes, wherein arranged downstream of the cutting and conveyor elements (6) in the rearward region are transverse conveyors (22 and 22') which are driven in rotation about vertical axes and each transverse conveyor (22, 22') comprises at least two conveyor elements (7, 8) which are driven in rotation and which are fitted with entrainment elements (43, 44, 45) and which form a common transfer location, wherein the inwardly disposed conveyor element (7) is at the same time in the form of a deflection conveyor element contributing to the intake region (5) of the carrier vehicle (2), **characterised in that** at least the working rotary speed of the inwardly disposed conveyor elements (7) can be variably adapted to the intake speed of the intake rollers (3) of the carrier vehicle (2).

**2.** A front-mounted attachment according to claim 1 **characterised in that** the drive rotary speeds of a plurality of conveyor elements (7, 8, 9, 10, 10', 10") of a transverse conveyor (22, 22') can be variably adapted to the intake speed of the intake rollers (3) of the carrier vehicle (2).

**3.** A front-mounted attachment according to claim 1 or claim 2 **characterised in that** the overlap rates ($R_1$) of the entrainment elements (43, 44, 45) of at least two adjacent conveyor elements (7, 8, 9, 10) forming a transfer location are of differing magnitudes in respect of their amount.

**4.** A front-mounted attachment according to claim 3 **characterised in that** the overlap rate ($R_1$) of a fur-

ther outwardly disposed conveyor element (8, 9, 10) is respectively less than that of the respectively adjacent further inwardly disposed conveyor element (7, 8, 9).

5. A front-mounted attachment according to claims 1 to 5 **characterised in that** the projection of the flight circles (34, 35, 36, 37) of the entrainment elements (43, 44, 45, 46) of the rotary bodies partially overlap.

6. A front-mounted attachment according to claim 4 **characterised in that** the planes of action of the mutually overlapping entrainment elements (43, 44, 45, 46) of the two adjacent conveyor elements (7, 8, 9, 10) assume different heightwise positions in relation to their axes of rotation.

7. A front-mounted attachment according to claims 1 to 5 **characterised in that** the entrainment elements (43, 44, 45, 46) are arranged in mutually displaced relationship in respect of their heightwise positions in relation to the axis of rotation of their conveyor element (7, 8, 9, 10) along a notional coiled surface line.

8. A front-mounted attachment according to claim 1 in conjunction with one or more of the preceding claims **characterised in that** the first inwardly disposed conveyor element (7) of the transverse conveyors (22, 22'), which is closest to the intake region of the intake rollers at the left and the right respectively of the vertical longitudinal central planes (15) has both a transverse conveyor and also a deflection conveyor function in the direction of the intake rollers (3).

9. A front-mounted attachment according to claim 1 in conjunction with one or more of the preceding claims **characterised in that** the connecting tangent (30) of the transverse conveyor (22, 22') has an acute angle of inclination (32) with respect to the perpendicular to the longitudinal central plane (15), the deflection angle (31) of the deflection element (10) being less than 90°.

10. A front-mounted attachment according to claim 1 in conjunction with one or more of the preceding claims **characterised in that** the conveyor element (10) has a conveying and rear wall-forming function of a conveyor passage (24, 24', 23, 23') in at least one of the rear nip regions (29, 29') of the front-mounted attachment (1) of the cutting and intake discs (6).

11. A front-mounted attachment according to claim 1 in conjunction with one or more of the preceding claims **characterised in that** a front-mounted attachment (1) includes at least two transverse conveyors (22, 22') on both sides of the vertical longitudinal central planes (15).

12. A front-mounted attachment according to claim 1 in conjunction with one or more of the preceding claims **characterised in that** the front-mounted attachment (1) includes at least four cutting and intake drums (6).

13. A front-mounted attachment according to claim 12 **characterised in that** the front-mounted attachment (4) includes four cutting and intake drums (6) and has a working width of about 4.5 m to 7.5 m, preferably about 6 m.

14. A front-mounted attachment according to claim 12 **characterised in that** the front-mounted attachment (4) includes six cutting and intake drums and has a working width of about 7.5 m to 10.5 m, preferably about 9 m.

15. A front-mounted attachment according to claim 12 **characterised in that** the front-mounted attachment (4) includes eight cutting and intake drums and has a working width of about 10.5 m to 13.5 m, preferably about 12 m.

## Revendications

1. Outil frontal (1) pour machines agricoles de récolte (2), destiné à couper, ramasser et entraîner un flux de produit de récolte composé de céréales à tiges longues, en particulier de pieds de maïs, comprenant au moins quatre éléments de coupe et de transport (6) qui, dans la position de travail, sont espacés transversalement à la direction de marche (F) et sont entraînés en rotation autour d'axes verticaux, des transporteurs transversaux (22 et 22') entraînés en rotation autour d'axes verticaux et disposés en aval des éléments de coupe et de transport (6) dans la zone arrière, chaque transporteur transversal (22, 22') étant composé d'au moins deux éléments de transport équipés d'éléments d'entraînement (43, 44, 45) et entraînés en rotation qui forment un point de transfert commun, l'élément de transport intérieur (7) étant conformé en même temps en élément de transport de renvoi secondant la zone d'alimentation (5) du véhicule porteur (2), **caractérisé en ce qu'**au moins la vitesse de rotation d'entraînement des éléments de transport intérieurs (7) peut être adaptée de manière variable à la vitesse d'alimentation des rouleaux d'alimentation (3) du véhicule porteur (2).

2. Outil frontal selon la revendication 1, **caractérisé en ce que** les vitesses de rotation d'entraînement de plusieurs éléments de transport (7, 8, 9, 10, 10', 10") d'un transporteur transversal (22, 22') peuvent être adaptées de manière variable à la vitesse d'alimentation des rouleaux d'alimentation (3) du véhicule porteur (2).

**3.** Outil frontal selon les revendications 1 et 2, **caractérisé en ce que** les taux de recouvrement (Ri) des éléments d'entraînement (43, 44, 45) d'au moins deux éléments de transport (7, 8, 9, 10) voisins formant un point de transfert sont de valeur différente.

**4.** Outil frontal selon la revendication 3, **caractérisé en ce que** le taux de recouvrement (Ri) d'un élément de transport (8, 9, 10) placé plus à l'extérieur est à chaque fois plus petit que le taux de recouvrement (Ri) de l'élément de transport (7, 8, 9) voisin placé plus à l'intérieur.

**5.** Outil frontal selon les revendications 1 à 5, **caractérisé en ce que** les projections des cercles (34, 35, 36, 37) décrits par les éléments d'entraînement (43, 44, 45, 46) des corps de révolution se recouvrent partiellement.

**6.** Outil frontal selon la revendication 4, **caractérisé en ce que** les plans d'action des éléments d'entraînement en recouvrement (43, 44, 45, 46) de deux éléments de transport (7, 8, 9, 10) voisins occupent des positions en hauteur différentes par rapport à leurs axes de rotation.

**7.** Outil frontal selon les revendications 1 à 5, **caractérisé en ce que**, sur le plan de leur position en hauteur, les éléments d'entraînement (43, 44, 45, 46) sont décalés les uns par rapport aux autres le long d'une ligne périphérique spiralée imaginaire par rapport à l'axe de rotation de leur élément de transport (7, 8, 9, 10).

**8.** Outil frontal selon la revendication 1 en liaison avec une ou plusieurs des revendications précédentes, **caractérisé en ce que** le premier élément de transport intérieur (7) des transporteurs transversaux (22, 22'), lequel est le plus proche de la zone d'alimentation des rouleaux d'alimentation à gauche, respectivement à droite des plans médians longitudinaux verticaux (15) présente aussi bien une fonction de transport transversal que de renvoi en direction des rouleaux d'alimentation (3).

**9.** Outil frontal selon la revendication 1 en liaison avec une ou plusieurs des revendications précédentes, **caractérisé en ce que** la tangente de liaison (30) du transporteur transversal (22, 22') présente un angle d'hélice aigu (32) par rapport à la perpendiculaire au plan médian longitudinal (15), l'angle de renvoi (31) de l'élément de renvoi (10) étant inférieur à 90°.

**10.** Outil frontal selon la revendication 1 en liaison avec une ou plusieurs des revendications précédentes, **caractérisé en ce que**, dans au moins une des zones de coin arrière (29, 29') des disques de coupe et d'alimentation (6) de l'outil frontal (1), l'élément de transport (10) a pour fonction de transporter et de former une paroi arrière d'un canal de transport (24, 24', 23, 23').

**11.** Outil frontal selon la revendication 1 en liaison avec une ou plusieurs des revendications précédentes, **caractérisé en ce qu'**un outil frontal (1) comprend au moins deux transporteurs transversaux (22, 22') de part et d'autre des plans médians longitudinaux verticaux (15).

**12.** Outil frontal selon la revendication 1 en liaison avec une ou plusieurs des revendications précédentes, **caractérisé en ce que** l'outil frontal (1) comprend au moins quatre tambours de coupe et d'alimentation (6).

**13.** Outil frontal selon la revendication 12, **caractérisé en ce que** l'outil frontal (1) comprend quatre tambours de coupe et d'alimentation (6) et possède une largeur de travail d'environ 4,5 m à 7,5 m, de préférence d'environ 6 m.

**14.** Outil frontal selon la revendication 12, **caractérisé en ce que** l'outil frontal (1) comprend six tambours de coupe et d'alimentation et possède une largeur de travail d'environ 7,5 m à 10,5 m, de préférence d'environ 9 m.

**15.** Outil frontal selon la revendication 12, **caractérisé en ce que** l'outil frontal (1) comprend huit tambours de coupe et d'alimentation et possède une largeur de travail d'environ 10,5 m à 13,5 m, de préférence d'environ 12 m.

Fig.1

Fig.1a

Fig.2

Fig.2a

EP 1 543 714 B1

Fig.2b

Fig.2c

Fig.2d

Fig.3

Fig.4

Fig.5

EP 1 543 714 B1

19

Fig.6

Fig.7

Fig.7a

EP 1 543 714 B1

Fig.8

EP 1 543 714 B1

Fig.8a

## IN DER BESCHREIBUNG AUFGEFÜHRTE DOKUMENTE

**In der Beschreibung aufgeführte Patentdokumente**

- DE 19856444 A1